# EUROPEAN PATENT SPECIFICATION

(11) **EP 4 589 937 B1**
(45) Date of publication and mention of the grant of the patent: **08.04.2026**
(21) Application number: 24187626.7
(22) Date of filing: 10.07.2024
(51) Int. Cl.: H04N 1/00, G06F 3/12

(54) **INFORMATION PROCESSING SYSTEM, PROGRAM, AND INFORMATION PROCESSING METHOD**
INFORMATIONSVERARBEITUNGSSYSTEM, PROGRAMM UND INFORMATIONSVERARBEITUNGSVERFAHREN
SYSTÈME, PROGRAMME ET PROCÉDÉ DE TRAITEMENT D'INFORMATIONS

(30) Priority: 19.01.2024 JP 2024006590
(43) Date of publication of application: 23.07.2025
(73) Proprietor: FUJIFILM Business Innovation Corp., Minato-ku Tokyo (JP)
(72) Inventor: YOKOTA, Masaru, Yokohama-shi, Kanagawa (JP)
(74) Representative: Kurig, Thomas

(56) References cited:
- JP-A- 2021 076 809
- US-A1- 2008 013 848
- US-A1- 2022 182 511

## Description

### BACKGROUND OF THE INVENTION

### (i) Field of the Invention

The present invention relates to an information processing system, a program, and an information processing method.

### (ii) Description of Related Art

For example, JP2020-141345A discloses a configuration in which, each time a test pattern output by an output unit is scanned by a scanning unit, a storage control unit sequentially stores data of the scanned test pattern in a storage unit and controls reading of the stored test pattern data, a difference image generation unit generates a difference image between the test pattern stored in the storage unit and the test pattern scan by the scanning unit in a case where an abnormality occurs, and an analysis unit analyzes the difference image to specify a cause of the abnormality based on an analysis result.
US 2008/013848 A1 discloses a method of detecting image quality defects including providing an electronic image including electronic image data, rendering an image based on the electronic image data, capturing the rendered image, the captured image including captured image data, deriving one-dimensional profiles from the captured image data, each of the captured one-dimensional profiles being derived from a set of image data in the same direction, deriving reference one-dimensional profiles from the electronic image data and generating a difference profile from the reference and captured one-dimensional profiles, and evaluating at least one of the captured one-dimensional profiles and reference one-dimensional profiles for image quality defects.

### SUMMARY OF THE INVENTION

A diagnosis image of a recording medium is output by an image forming section, a scanning section scans the output diagnosis image, and in a case where an image abnormality exists in the scan image in a diagnosis of the scanned scan image, measures are taken such that the image abnormality does not occur in the output recording medium. In addition, the measures may not be taken for the image abnormality which does not become a problem and may be postponed.

Meanwhile, the image abnormality detected by the diagnosis of the scan image may deteriorate in degree due to a temporal change of the image forming section. In a case where a user is not notified that the image abnormality deteriorates, a downtime may occur thereafter.

The present invention is provided in appended claims 1, 9, and 10. The following disclosure serves a better understanding of the present invention. An object of the present invention is to reduce occurrence of a downtime as compared with a case where a notification that an image abnormality detected by image diagnosis deteriorates is not given.

According to a first aspect of the present disclosure, there is provided an information processing system including: one or a plurality of processors configured to: acquire a scan image, which is an image obtained by a scanning section scanning a diagnosis image of a recording medium output by an image forming section; and output, in a case where the scan image has an image abnormality and the image abnormality is a worsening abnormality that deteriorates in degree due to a temporal change of the image forming section with a diagnosis on the acquired scan image, information on the worsening abnormality.

According to a second aspect of the present disclosure, in the information processing system according to the first aspect of the present invention, the one or plurality of processors may be configured to: output information on another abnormality other than the worsening abnormality, and the information on the worsening abnormality may be output in a mode in which a degree of emphasis to a user is increased as compared with the information on the other abnormality.

According to a third aspect of the present disclosure, in the information processing system according to the second aspect of the present invention, the mode in which the degree of emphasis to the user is increased may be a display mode for increasing a visibility.

According to a fourth aspect of the present invention, in the information processing system according to any one of the first to third aspects, the information on the worsening abnormality may include a display for giving a caution alert for an event that is likely to occur in future.

According to a fifth aspect of the present disclosure, in the information processing system according to the fourth aspect of the present invention, the display for giving the caution alert may include information indicating a countermeasure for the worsening abnormality.

According to a sixth aspect of the present disclosure, in the information processing system according to the fourth aspect of the present invention, the display for giving the caution alert may include information indicating an estimated state of the worsening abnormality at a predetermined time.

According to a seventh aspect of the present disclosure, in the information processing system according to the fourth aspect of the present invention, the display for giving the caution alert may be included in the information on the worsening abnormality in a case where a next scheduled diagnosis date is specified and the specified next scheduled diagnosis date satisfies a predetermined condition for the worsening abnormality.

According to an eighth aspect of the present disclosure, in the information processing system according to any one of the first to seventh aspects of the present invention, whether or not the image abnormality is the worsening abnormality may be determined in accordance with an occurrence cause of the image abnormality.

According to a ninth aspect of the present disclosure, there is provided a program causing an information processing apparatus to realize: an acquisition function of acquiring a scan image, which is an image obtained by a scanning section scanning a diagnosis image of a recording medium output by an image forming section; and an output function of outputting, in a case where the scan image has an image abnormality and the image abnormality is a worsening abnormality that deteriorates in degree due to a temporal change of the image forming section with a diagnosis on the scan image acquired by the acquisition function, information on the worsening abnormality.

According to a tenth aspect of the present disclosure, there is provided an information processing method including: acquiring a scan image, which is an image obtained by a scanning section scanning a diagnosis image of a recording medium output by an image forming section; and outputting, in a case where the scan image has an image abnormality and the image abnormality is a worsening abnormality that deteriorates in degree due to a temporal change of the image forming section with a diagnosis on the scan image acquired in the acquiring, information on the worsening abnormality.

According to the first aspect of the present disclosure, occurrence of a downtime can be reduced, as compared with a case where a notification that the image abnormality detected by the image diagnosis deteriorates is not given.

According to the second aspect of the present disclosure, the user can easily recognize the information on the worsening abnormality, as compared with a case where the configuration is not adopted in which the information on the other abnormality other than the worsening abnormality is output and the information on the worsening abnormality is output in the form in which a degree of emphasis to the user is increased as compared with the information on the other abnormality.

According to the third aspect of the present disclosure, the user can easily visually recognize the information on the worsening abnormality as compared with a case where the configuration is not adopted in which the form in which the degree of emphasis to the user is increased is a display form for increasing the visibility.

According to the fourth aspect of the present disclosure, the information on the worsening abnormality can prompt the user to take measures for the event that may occur in the future, as compared with a case where the configuration including the display for giving the caution alert for the event that may occur in the future is not adopted.

According to the fifth aspect of the present disclosure, the user can easily take measures for the event that may occur in the future, as compared with a case where the configuration in which the display for giving the caution alert is provided with the information indicating the countermeasure for the worsening abnormality is not adopted.

According to the sixth aspect of the present disclosure, the display for giving the caution alert can present a timing for taking measures for the event that may occur in the future to the user, as compared with a case where the configuration including the information indicating the estimated state of the worsening abnormality at the predetermined time is not adopted.

According to the seventh aspect of the present disclosure, the user can be prevented from taking unnecessary measures, as compared with a case where the configuration is not adopted in which the display for giving the caution alert is included in the information on the worsening abnormality in a case where the next scheduled diagnosis date is specified and the specified next scheduled diagnosis date satisfies the predetermined condition for the worsening abnormality.

According to the eighth aspect of the present disclosure, accuracy of determining whether or not the image abnormality is the worsening abnormality can be improved, as compared with a case where the configuration is not adopted in which whether or not the image abnormality is the worsening abnormality is determined in accordance with the occurrence cause of the image abnormality.

According to the ninth aspect of the present disclosure, the occurrence of the downtime can be reduced, as compared with a case where a notification that the image abnormality detected by the image diagnosis deteriorates is not given.

According to the tenth aspect of the present disclosure, the occurrence of the downtime can be reduced, as compared with a case where a notification that the image abnormality detected by the image diagnosis deteriorates is not given.

### BRIEF DESCRIPTION OF THE DRAWINGS

Exemplary embodiment(s) of the present invention will be described in detail based on the following figures, wherein:
Fig. 1 is a diagram illustrating an example of a diagnosis system;
Fig. 2 is a diagram illustrating an example of a hardware configuration of an information processing unit provided in a server apparatus and an image forming apparatus;
Fig. 3 is a diagram describing the image forming apparatus;
Fig. 4 is a diagram describing a configuration example in which image formation on paper is performed in the image forming apparatus;
Figs. 5A and 5B are tables describing a method of specifying a cause of an image abnormality, Fig. 5A illustrates various image forming conditions in a case of generating a chart paper, and Fig. 5B illustrates the specified cause;
Fig. 6 is a block diagram describing a functional configuration of a CPU provided in the server apparatus;
Figs. 7A to 7C are diagrams describing a process by a diagnosis result acquisition unit, Fig. 7A illustrates a scan image, Fig. 7B illustrates an average brightness profile, and Fig. 7C illustrates a diagnosis result, respectively;
Figs. 8A to 8C are diagrams describing a result display screen displayed on a display device of a user terminal, Fig. 8Aillustrates a scan image as a diagnosis target, Fig. 8B illustrates a result display screen as an example of a diagnosis result of the scan image, and Fig. 8C illustrates a result display screen as another example of the diagnosis result of the scan image;
Fig. 9 is a flowchart describing a process of determining a display content of a result display screen;
Fig. 10 is a flowchart describing a process of calculating the increase of streak grade; and
Fig. 11 is a flowchart describing a process of predicting the streak grade of the next visit.

### DETAILED DESCRIPTION OF THE INVENTION

Hereinafter, an exemplary embodiment of the present disclosure will be described with reference to the accompanying drawings.

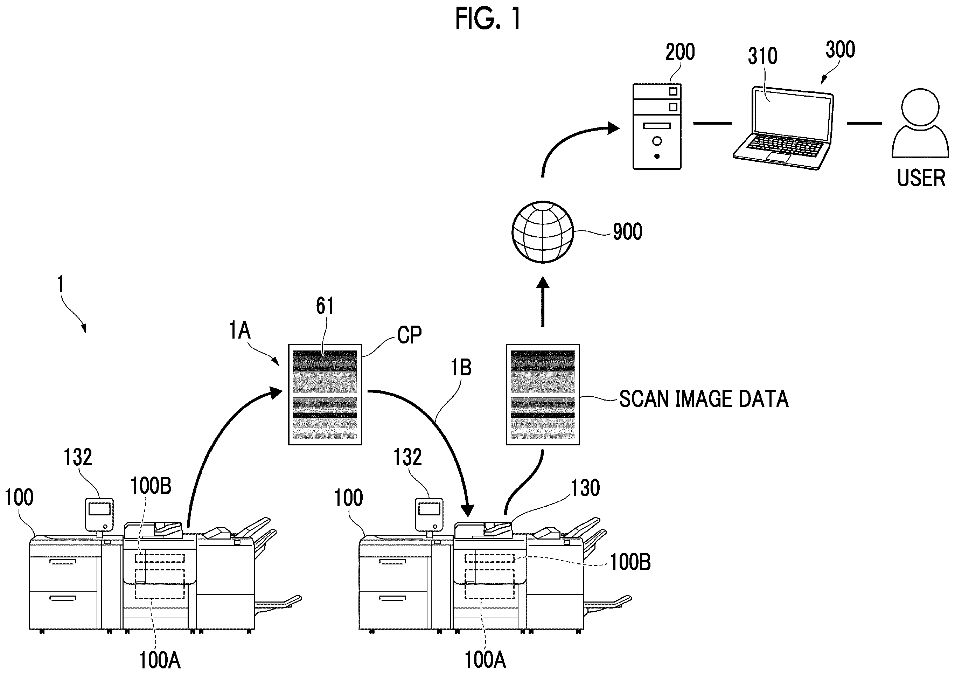

Fig. 1 is a diagram illustrating an example of a diagnosis system 1.

The diagnosis system 1 according to the present exemplary embodiment is provided with a plurality of image forming apparatuses 100 and a server apparatus 200 that is connected to each of the plurality of image forming apparatuses 100 via a communication line 900. In the present exemplary embodiment, in the server apparatus 200 as an example of an information processing system and an example of an information processing apparatus, a diagnosis of each image forming apparatus 100 is performed.

Further, the diagnosis system 1 in the present exemplary embodiment is provided with a user terminal 300 that is connected to the server apparatus 200 and receives an operation from a user.

In Fig. 1, two image forming apparatuses 100 among the plurality of image forming apparatuses 100 are displayed.

The user terminal 300 is provided with a display device 310. The user terminal 300 is realized by a computer. Examples of a form of the user terminal 300 include a personal computer (PC), a smartphone, and a tablet terminal.

The image forming apparatus 100 is provided with an image forming unit 100A as an example of an image forming section that forms an image on paper which is an example of a recording medium.

For example, the formation of the image on the paper by the image forming unit 100A is performed by an ink jet method or an electrophotographic method. In addition, the formation of the image on the paper by the image forming unit 100A is not limited to the ink jet method or the electrophotographic method, and may be performed by other methods.

The image forming apparatus 100 is further provided with an information processing unit 100B. The information processing unit 100B executes various processes executed in the image forming apparatus 100.

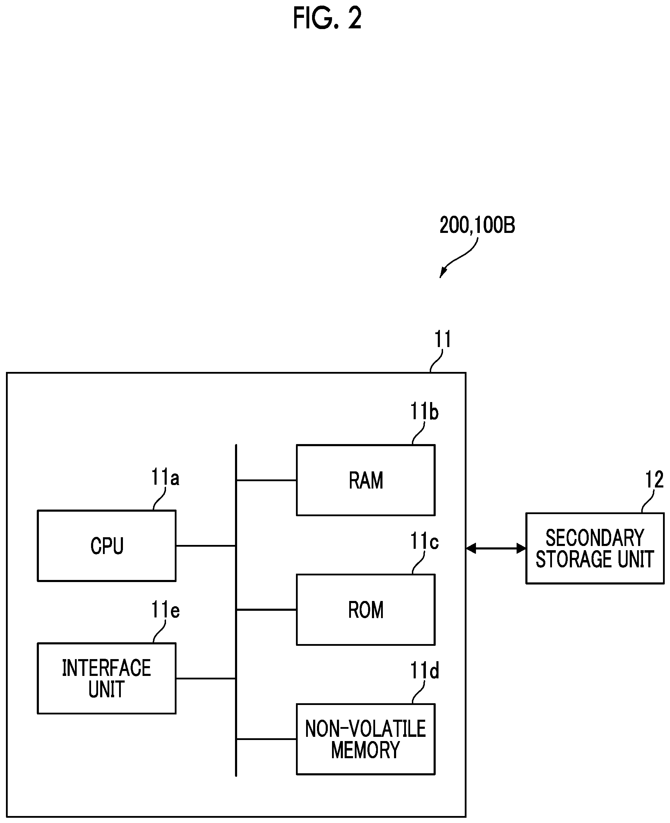

Fig. 2 is a diagram illustrating an example of a hardware configuration of the information processing unit 100B provided in the server apparatus 200 and the image forming apparatus 100. The information processing unit 100B provided in the server apparatus 200 and the image forming apparatus 100 is realized by a computer.

Each of the server apparatus 200 and the information processing unit 100B includes an arithmetic processing unit 11 that executes a digital arithmetic process according to a program, and a secondary storage unit 12 that stores information.

The secondary storage unit 12 is realized, for example, by a known information storage device such as a hard disk drive (HDD), a semiconductor memory, or a magnetic tape.

The arithmetic processing unit 11 is provided with a CPU 11a as an example of a processor.

In addition, the arithmetic processing unit 11 is provided with a RAM 11b used as a working memory or the like of the CPU 11a and a ROM 11c in which programs or the like executed by the CPU 11a are stored.

In addition, the arithmetic processing unit 11 is provided with a non-volatile memory 11d that is configured to be rewritable and can hold data even in a case where power supply is interrupted and an interface unit 11e that controls each unit, such as a communication unit, connected to the arithmetic processing unit 11.

The non-volatile memory 11d is configured with, for example, an SRAM or a flash memory that is backed up by a battery. The secondary storage unit 12 stores the programs executed by the arithmetic processing unit 11 in addition to files and the like.

In the present exemplary embodiment, the arithmetic processing unit 11 reads the program stored in the ROM 11c or the secondary storage unit 12 to execute each process.

The program executed by the CPU 11a can be provided to the server apparatus 200 and the information processing unit 100B in a state in which the program is stored in a computer-readable recording medium such as a magnetic recording medium (for example, a magnetic tape or a magnetic disk), an optical recording medium (for example, an optical disk), a magnetooptical recording medium, or a semiconductor memory. Further, the program executed by the CPU 11a may be provided to the server apparatus 200 and the information processing unit 100B by a communication section such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

The process executed by the image forming apparatus 100 among the processes described below is executed by the CPU 11a as an example of the processor provided in the image forming apparatus 100.

The process executed by the server apparatus 200 among the processes described below is executed by the CPU 11a as an example of the processor provided in the server apparatus 200.

Further, the process for diagnosing the image forming apparatus 100 among the processes described below is executed by the server apparatus 200 as an example of the information processing system. The information processing system that executes the process for diagnosing the image forming apparatus 100 may be realized by one apparatus such as one server apparatus 200, or may be realized by a plurality of apparatuses.

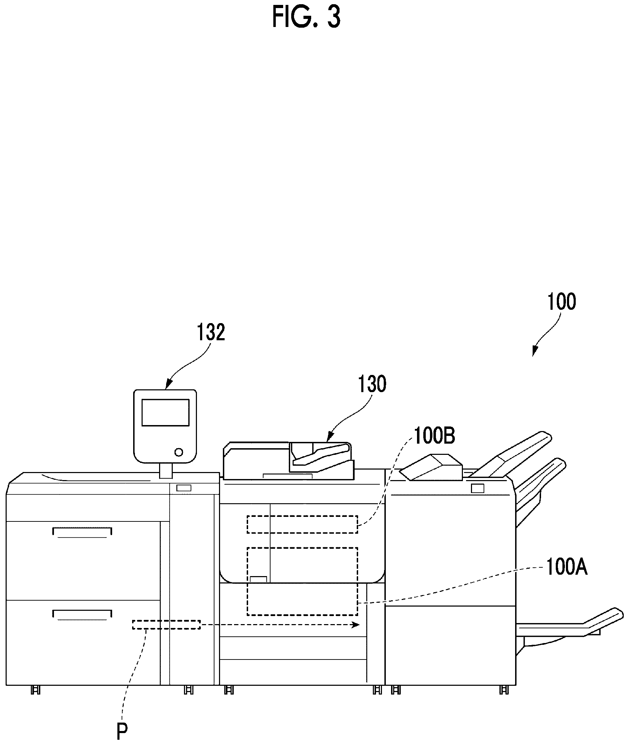

Fig. 3 is a diagram describing the image forming apparatus 100.

In the present exemplary embodiment, as described above, the image forming apparatus 100 is provided with the image forming unit 100A that forms an image on paper P which is an example of a recording medium.

In the present exemplary embodiment, in a case where the paper P passes through the image forming unit 100A, the paper P passes through the image forming unit 100A in a state in which one side of the paper P faces the image forming unit 100A.

Further, the image forming apparatus 100 is provided with an image scanning device 130 as an example of a scanning section that scans the image formed on the recording medium such as the paper P.

Such an image scanning device 130 is a so-called scanner having a function of transporting the paper P. The image scanning device 130 includes a light source that emits light to the paper P or a light receiving unit such as a CCD that receives reflected light from the paper P. In the present exemplary embodiment, scan image data to be described below is generated based on the reflected light received by the light receiving unit.

A scanning position of an image is set in advance in the image scanning device 130, and the image scanning device 130 scans an image at a portion of the paper P that is sequentially transported, which is located at the scanning position.

In addition, the image forming apparatus 100 has an information transmission function to transmit information to the server apparatus 200 (see Fig. 1).

In the example illustrated in Fig. 3, the image scanning device 130 is provided at an upper portion of the image forming apparatus 100. The image scanning device 130 sequentially scans paper (not illustrated) set by the user. The paper is not limited to paper on which an image is formed by the image forming apparatus 100, and may be paper on which an image is formed by another image forming apparatus.

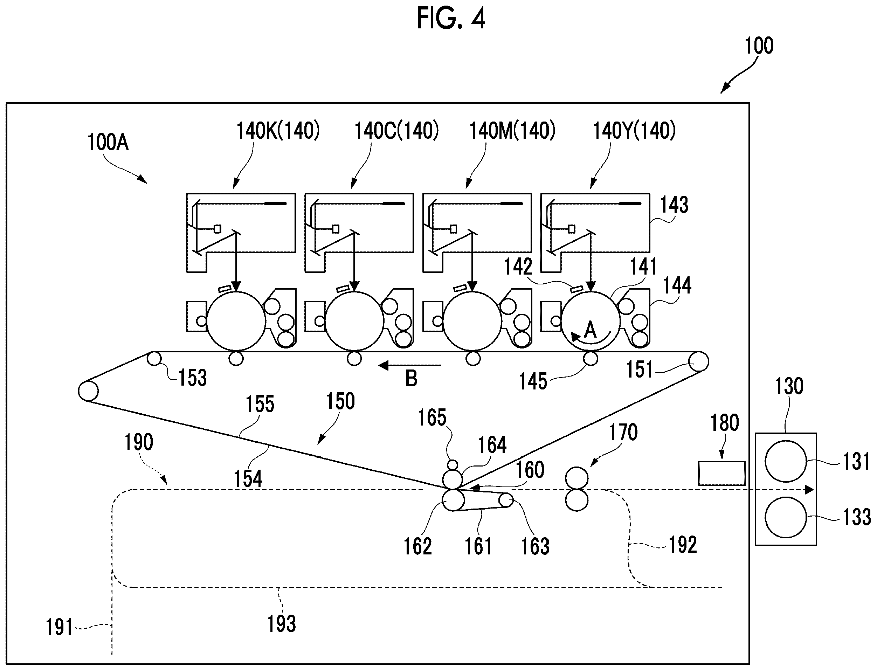

An installation mode of the image scanning device 130 is not limited to the mode illustrated in Fig. 3. The image scanning device 130 may be provided inside the image forming apparatus 100 and on a transport path of the paper P (see Fig. 4).

In this case, the paper P on which an image is formed by the image forming unit 100A sequentially passes through the image scanning device 130, and at the time of passing through the paper P, each image of the paper P is scanned in order.

In the present exemplary embodiment, the image scanning device 130 is provided with a paper reversing mechanism such that the paper can be supplied after the front and back sides are reversed with respect to the scanning position of the image.

As a result, in the present exemplary embodiment, the paper on which an image formed on one side is scanned can be reversed and supplied to the scanning position again. As a result, images on the front and back sides of the paper can be scanned.

In addition, in scanning an image on paper, the paper may be placed on a platen (not illustrated) configured with plate-shaped glass or the like such that the paper placed on the platen may be scanned.

Further, each image forming apparatus 100 is provided with an operation reception unit 132 that receives an operation from the user. The operation reception unit 132 is configured with a so-called touch panel. The operation reception unit 132 displays information for the user and receives an operation performed by the user.

The display of information for the user and the reception of the operation by the user are not limited to being performed by one operation reception unit 132 as in the present exemplary embodiment. The operation reception unit and the information display unit may be provided separately.

In the present exemplary embodiment, in a case where the image forming apparatus 100 (see Fig. 1) is diagnosed, first, the image forming unit 100A is operated to form a chart image 61 on paper. As a result, as indicated by a reference sign 1A, chart paper CP which is the paper on which the chart image 61 that is an example of a diagnosis image is formed is generated.

The chart image 61 is an image to be used to diagnose the image forming apparatus 100. In the present exemplary embodiment, the chart paper CP which is the paper on which the chart image 61 to be used for the diagnosis is formed is generated.

In a case where the chart paper CP is generated, the chart paper CP is placed on the image scanning device 130 as indicated by the reference sign 1B in Fig. 1. The image scanning device 130 is used to scan the chart paper CP on which the chart image 61 is formed.

As a result, scan image data obtained by scanning the chart paper CP is generated.

In the present exemplary embodiment, the scan image data is transmitted to the server apparatus 200, and then is stored in the server apparatus 200. The server apparatus 200 diagnoses the image forming apparatus 100 based on the scan image data.

In the present exemplary embodiment, a user who uses the diagnosis system 1 in the present exemplary embodiment, such as a maintainer who maintains the image forming apparatus 100, accesses the server apparatus 200 and refers to a result of the diagnosis by the server apparatus 200.

In each image forming apparatus 100, in this manner, the chart paper CP is generated and the chart paper CP is scanned, and thus the scan image data is generated.

Such scan image data is transmitted to the server apparatus 200. As described above, in the present exemplary embodiment, the server apparatus 200 diagnoses the image forming apparatus 100.

A diagnosis process executed by the server apparatus 200 will be described.

In the present exemplary embodiment, the CPU 11a (see Fig. 2) as an example of the processor provided in the server apparatus 200 diagnoses the image forming apparatus 100 based on the scan image data described above, which is transmitted from the image forming apparatus 100, and then acquires a diagnosis result which is the result of the diagnosis.

More specifically, the CPU 11a acquires the diagnosis result for each of a plurality of diagnosis items, which is a diagnosis result for the chart image 61 that is the image formed on the chart paper CP.

In the present exemplary embodiment, the plurality of diagnosis items are predetermined. The CPU 11a in the server apparatus 200 analyzes the chart image 61 included in the scan image data, and acquires a diagnosis result for each of the plurality of diagnosis items.

More specifically, for example, the CPU 11a in the server apparatus 200 acquires the diagnosis result for each of the plurality of the diagnosis items based on a difference between a reference value predetermined for each of the plurality of diagnosis items and a value obtained by analyzing the chart image 61.

The CPU 11a in the server apparatus 200 acquires a diagnosis result having a worse evaluation as the difference is increased.

Fig. 4 is a diagram describing a configuration example in which image formation on the paper P is performed in the image forming apparatus 100, and illustrates a case of an electrophotographic method.

The image forming apparatus 100 is provided with the image forming unit 100A and a paper transport unit 190. The image scanning device 130 described above is disposed at a paper output position of the image forming apparatus 100.

The image forming unit 100A is provided with an image forming unit 140, an intermediate transfer belt 150, a secondary transfer unit 160, and a fixing machine 170, and a post-processing unit 180.

In the present exemplary embodiment, four image forming units 140Y, 140M, 140C, and 140K respectively corresponding to four colors of toners including yellow (Y), magenta (M), cyan (C), and black (K) are provided as the image forming unit 140.

The image forming units 140Y, 140M, 140C, and 140K are arranged in a moving direction of the intermediate transfer belt 150 and form a toner image through an electrophotographic method.

Each of the image forming units 140Y, 140M, 140C, and 140K has a photoconductor drum 141, a charging unit 142, an exposure unit 143, a developing unit 144, and a primary transfer unit 145.

Each of the image forming units 140Y, 140M, 140C, and 140K forms a toner image of any color of YMCK and transfers the toner image onto the intermediate transfer belt 150. As a result, a toner image in which the toner images of respective colors including YMCK overlap each other is formed on the intermediate transfer belt 150.

The photoconductor drum 141 rotates in an arrow A direction at a predetermined speed. In addition, an electrostatic latent image is formed on a peripheral surface of the photoconductor drum 141.

The charging unit 142 charges the peripheral surface of the photoconductor drum 141 at a predetermined potential.

The exposure unit 143 irradiates the charged peripheral surface of the photoconductor drum 141 with light and forms an electrostatic latent image on the peripheral surface of the photoconductor drum 141.

The developing unit 144 forms a toner image by attaching a toner to the electrostatic latent image formed on the peripheral surface of the photoconductor drum 141.

The primary transfer unit 145 transfers the toner image formed on the peripheral surface of the photoconductor drum 141 onto the intermediate transfer belt 150.

A voltage having a polarity opposite to a charging polarity of a toner is applied to the primary transfer unit 145. As a result, the toner image formed on the peripheral surface of the photoconductor drum 141 is sequentially electrostatically sucked onto the intermediate transfer belt 150, and one overlapping color toner image is formed on the intermediate transfer belt 150.

The intermediate transfer belt 150 is supported by a plurality of roller-shaped members. The intermediate transfer belt 150 is formed in an endless shape and circulates and moves in an arrow B direction. In addition, the intermediate transfer belt 150 includes an outer peripheral surface 154 and an inner peripheral surface 155.

The intermediate transfer belt 150 is used in transporting a toner image. In the present exemplary embodiment, a toner image is formed on the outer peripheral surface 154 of the intermediate transfer belt 150, and the toner image is transported to the secondary transfer unit 160 with the movement of the intermediate transfer belt 150.

In the present exemplary embodiment, a drive roller 151 that is driven by a motor (not illustrated) and drives the intermediate transfer belt 150 is provided as the roller-shaped member disposed inside the intermediate transfer belt 150. In addition, an idle roller 153 and a backup roller 164 that support the intermediate transfer belt 150 are provided as the roller-shaped members.

The roller-shaped members are rotatably provided and are pressed against the inner peripheral surface 155 of the intermediate transfer belt 150.

In the paper transport unit 190, a transport path 191 for taking out paper P from a paper storage unit (not illustrated) and transporting the paper P to the secondary transfer unit 160, a reversal path 192 that is branched between the fixing machine 170 and the post-processing unit 180 and is for reversing the paper fixed by the fixing machine 170 upside down, and a transport path 193 for guiding the paper P reversed on the reversal path 192 to the transport path 191 are provided.

In a case of two-sided printing, the paper is transported through the reversal path 192 and the transport path 193.

The transport path 191 is formed such that the paper P fixed by the fixing machine 170 is transported to the post-processing unit 180 and then output from the image forming apparatus 100. The paper P output from the image forming apparatus 100 passes through the image scanning device 130.

The post-processing unit 180 referred to here is a device that executes, for example, a process of binding a bundle of paper, a process of folding the paper, a process of cutting the paper, a process of bookbinding, and the like. In the case of the chart paper CP, the chart paper CP is output without being post-processed, and the chart image 61 (for example, see Fig. 1) is scanned by the image scanning device 130.

The image scanning device 130 includes a scanning unit 131 located on the upper side of a region through which the paper passes, and a scanning unit 133 located on the lower side. In a case of single-sided printing, an image is scanned by the upper scanning unit 131, and in a case of two-sided printing, images on both sides are scanned at once by the upper scanning unit 131 and the lower scanning unit 133.

The secondary transfer unit 160 includes a secondary transfer transport belt 161 disposed in contact with the outer peripheral surface 154 of the intermediate transfer belt 150. The secondary transfer transport belt 161 is a semi-conductive endless annular belt stretched by a drive roller (transfer roller) 162 consisting of metal, for example, SUS, and a driven roller 163 consisting of, for example, a rubber roller. The secondary transfer transport belt 161 is transported at a predetermined speed by the drive roller 162, and a predetermined tension is applied to the secondary transfer transport belt 161 by the drive roller 162 and the driven roller 163.

Further, the secondary transfer unit 160 is provided with the backup roller 164 that is disposed on the inner peripheral surface 155 side of the intermediate transfer belt 150 and forms a counter electrode of the secondary transfer transport belt 161, and a metal power feeding roller 165 that applies a secondary transfer bias to the backup roller 164.

The secondary transfer unit 160 configured in this manner transfers a toner image transported to the secondary transfer unit 160 by the intermediate transfer belt 150 onto the transported paper P.

The fixing machine 170 is disposed on a downstream side of the secondary transfer unit 160 in a transport direction of the paper P. The fixing machine 170 is provided with a fixing roller having a heating source and a pressurizing roller provided to face the fixing roller. The fixing machine 170 melts an unfixed toner image on the paper P and fixes the toner image on the paper P. As a result, an image consisting of the toner image is formed on the paper P.

Next, a method of specifying a cause of an image abnormality will be described.

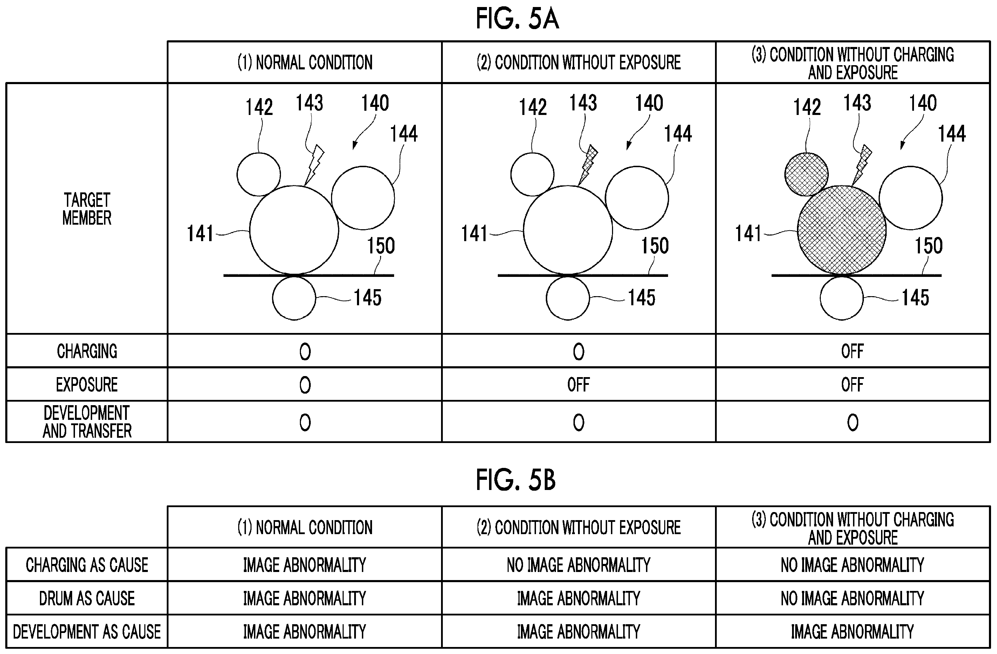

Figs. 5A and 5B are tables describing a method of specifying a cause of an image abnormality, Fig. 5A illustrates various image forming conditions in a case of generating the chart paper CP (see Fig. 1), and Fig. 5B illustrates the specified cause.

The table illustrated in Fig. 5A lists various image forming conditions in a case where the chart paper CP is generated in the image forming apparatus 100. The various image forming conditions are three conditions of (1) a normal condition, (2) a condition without exposure, and (3) a condition without charging and exposure.

(1) In a case of the normal condition, the charging unit 142 charges the photoconductor drum 141, the exposure unit 143 exposes the photoconductor drum 141, and the developing unit 144 develops the exposure unit 143 in the image forming unit 140. The image developed by the photoconductor drum 141 is transferred to the intermediate transfer belt 150 by the primary transfer unit 145.
(2) In the case of the condition without exposure, only the exposure is not performed by the exposure unit 143, and the transfer to the intermediate transfer belt 150 is performed.
(3) In the case of the condition without charging and exposure, a toner image is transferred to the intermediate transfer belt 150 without performing only the charging by the charging unit 142 and only the exposure by the exposure unit 143.

The display illustrated in Fig. 5B illustrates the presence or absence of an image abnormality occurrence in each of the cases of "(1) normal condition", "(2) condition without exposure", and "(3) condition without charging and exposure". A cause is specified as exposure, drum, or development depending on a combination of the presence or absence of the image abnormality occurrence. The scan image data obtained by scanning the chart image 61 (see Fig. 1) of the chart paper CP according to the above (1) to (3) is used to specify the cause of the image abnormality and will be referred to as an exclusive chart below.

### <In Case Where Exposure is Specified as Cause>

In a case where a streak appears in the normal condition, and the same streak does not appear in the condition without exposure and also does not appear in the condition without charging and exposure, it is specified that the cause of the streaks is the exposure by the exposure unit 143. That is, the streak is an exposure streak.

### <In Case Where Drum is Specified as Cause>

In a case where a streak appears in the normal condition, and the same streak appears in the condition without exposure, but does not appear in the condition without charging and exposure, it is specified that the cause of the streaks is a deterioration of a surface of the photoconductor drum 141. That is, the streak is a drum streak.

### <In Case Where Development is Specified as Cause>

In a case where a streak appears in the normal condition, and the same streak appears in the condition without exposure and also appears in the condition without charging and exposure, it is specified that the cause of the streaks is the development by the developing unit 144. That is, the streak is a development streak.

Next, a functional configuration of the CPU 11a according to the present exemplary embodiment will be described.

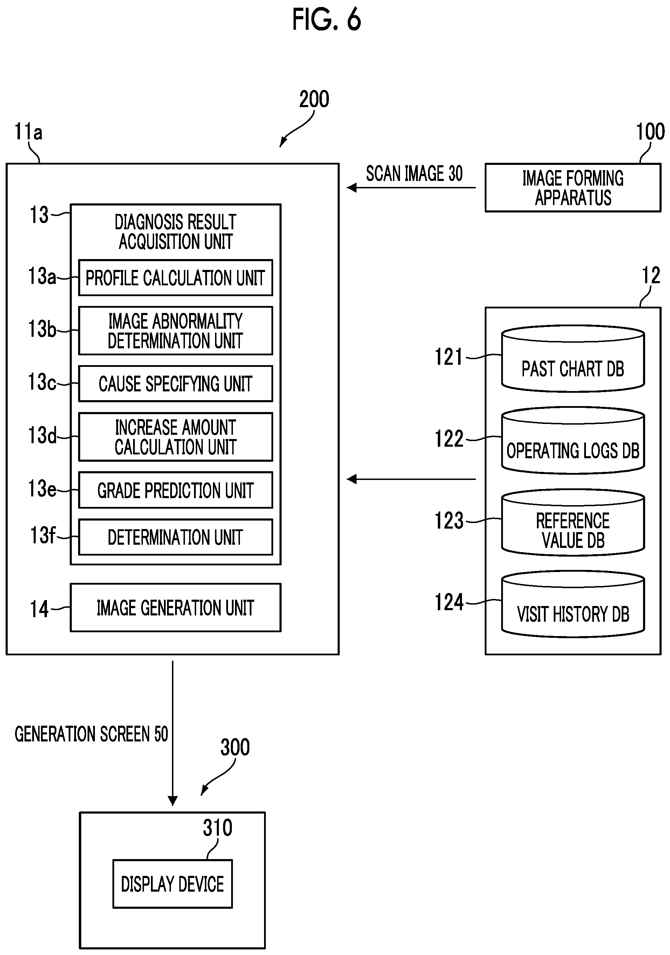

Fig. 6 is a block diagram describing a functional configuration of the CPU 11a provided in the server apparatus 200, and also illustrates the image forming apparatus 100 and the user terminal 300 for easy description.

As illustrated in Fig. 6, the CPU 11a includes a diagnosis result acquisition unit 13 and a screen generation unit 14.

### <Diagnosis Result Acquisition Unit 13>

The diagnosis result acquisition unit 13 acquires a diagnosis result, which is a result of a diagnosis performed on a scan image 30 transmitted from the image forming apparatus 100. The diagnosis is performed for each of predetermined diagnosis items in accordance with the chart image 61 (see Fig. 1) included in the scan image 30. Therefore, the diagnosis result acquisition unit 13 acquires a diagnosis result for each of the predetermined diagnosis items, and performs the process.

More specifically, the diagnosis result acquisition unit 13 according to the present exemplary embodiment acquires a diagnosis result related to a streak-shaped image extending in paper feed direction, which is an image abnormality of the scan image 30. The diagnosis result described here includes detection information indicating whether or not a streak-shaped image occurs and cause information indicating a cause specified in a case where the streak-shaped image occurs. In addition, the diagnosis result includes increase amount information indicating calculated increase of the streak grade and prediction value information indicating the predicted streak grade at a time of next visit. The streak grade is an indicator of the visibility of a streak, which is determined by factors such as brightness, width, and the brightness changes per unit distance.

The streak-shaped image described here is a so-called printer streak that occurs during image formation.

As illustrated in Fig. 6, the diagnosis result acquisition unit 13 includes a profile calculation unit 13a, an image abnormality determination unit 13b, and a cause specifying unit 13c as a configuration for acquiring a diagnosis result related to a streak-shaped image by image analysis of the scan image 30. In addition, the diagnosis result acquisition unit 13 includes an increase amount calculation unit 13d, a grade prediction unit 13e, and a determination unit 13f.

The profile calculation unit 13a calculates an average brightness profile of the scan image 30.

The image abnormality determination unit 13b detects an image abnormality existing in the scan image 30 by using the average brightness profile calculated by the profile calculation unit 13a.

The image abnormality determination unit 13b according to the present exemplary embodiment uses the average brightness profile calculated by the profile calculation unit 13a, and it is also conceivable to employ another method, for example, a method of outputting and scanning the chart paper CP (see Fig. 1) having different conditions and determining an image abnormality based on a width or a density of a streak. In a case where such a method is adopted, a configuration in which the profile calculation unit 13a is omitted can be adopted.

The cause specifying unit 13c specifies a cause of the detected image abnormality. As the cause of the above, a case where the cause is exposure by the exposure unit 143 (see Fig. 4), a case where the cause is development by the developing unit 144 (see Fig. 4), and a case where the cause is a surface deterioration of the photoconductor drum 141 (see Fig. 4) can be provided.

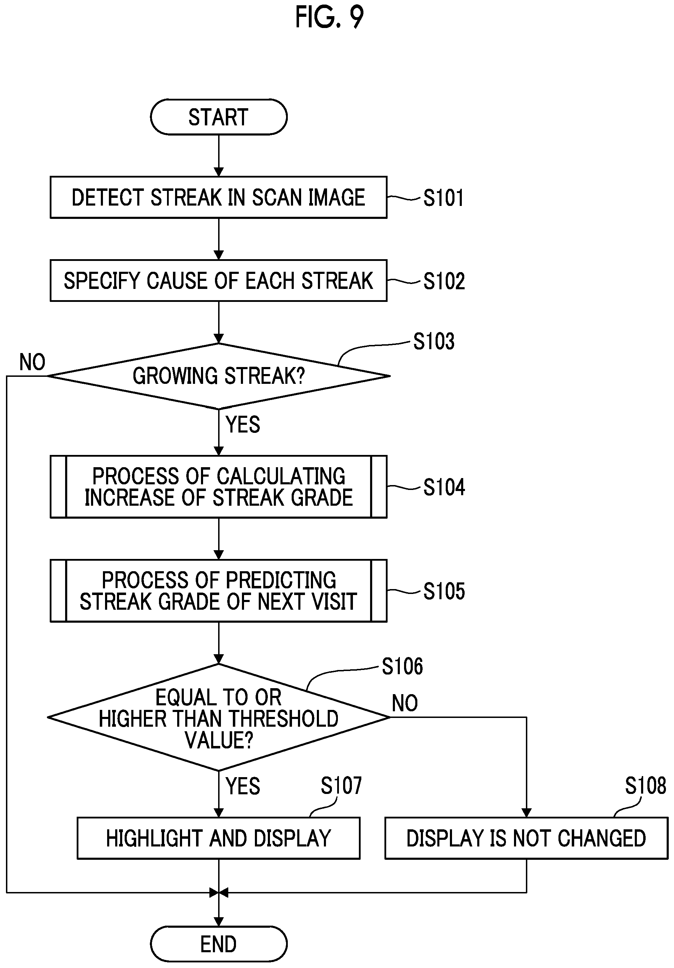

The increase amount calculation unit 13d performs a process of calculating the increase of streak grade (see S104 in Fig. 9) to be described below.

The grade prediction unit 13e performs a process of predicting the streak grade of the next visit (see S105 in Fig. 9) to be described below.

The determination unit 13f determines whether or not there is a growing streak (see S103 in Fig. 9), and determines whether or not a streak grade for the next visit is equal to or higher than a threshold value (see S106 in Fig. 9). As will be described below, instead of determining whether or not the streak grade is equal to or higher than the threshold value, a determination may be made in which an increase in the streak grade from this time to the next time is focused on.

### <Screen generation unit 14>

The screen generation unit 14 generates a screen for notifying a user of the acquired diagnosis result. The user is notified of a generation screen 50, which is a generated screen, by being transmitted from the server apparatus 200 to the user terminal 300, and then displayed on the display device 310 of the user terminal 300.

### <Secondary Storage Unit 12>

The secondary storage unit 12 includes a past chart DB 121, an operating logs DB 122, a reference value DB 123, and a visit history DB 124. Such DBs 121 to 124 are databases that store information used in the processes (see Figs. 9 to 11) of determining a display content of a result display screen.

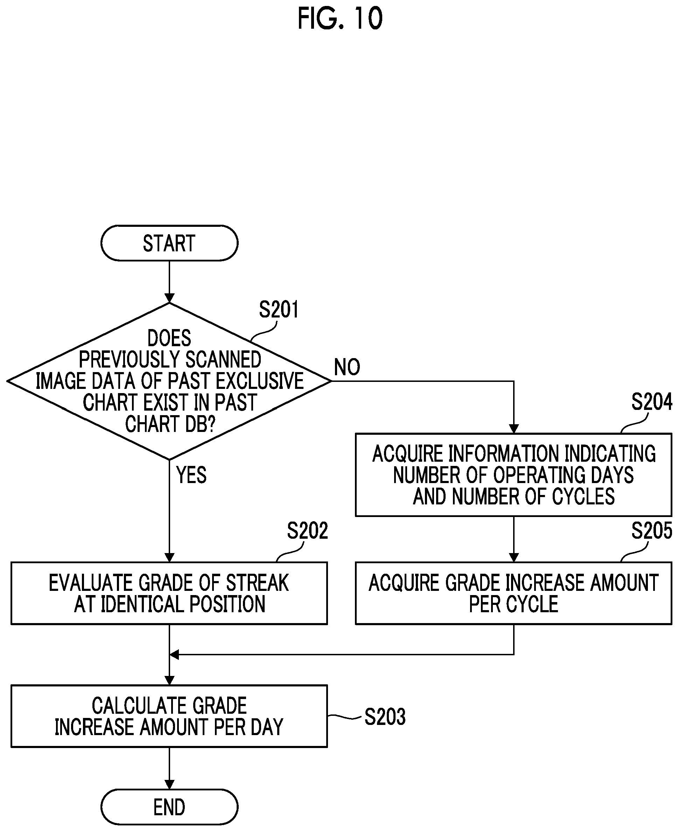

The past chart DB 121 stores an exclusive chart used for an image diagnosis in the past, which is an exclusive chart used for specifying a cause of an image abnormality. Such an exclusive chart is used to evaluate a streak grade of the past chart (see step S202 in Fig. 10).

The operating logs DB 122 stores operating logs indicating an operating situation of the image forming apparatus 100 (see Fig. 1) as a diagnosis target. The operating logs described herein include information indicating the number of operating days or an operating time, or information indicating the number of cycles indicating the number of times of image formation or an output of the paper P. The operating logs are used to specify the number of operating days and the number of cycles (see step S204 in Fig. 10).

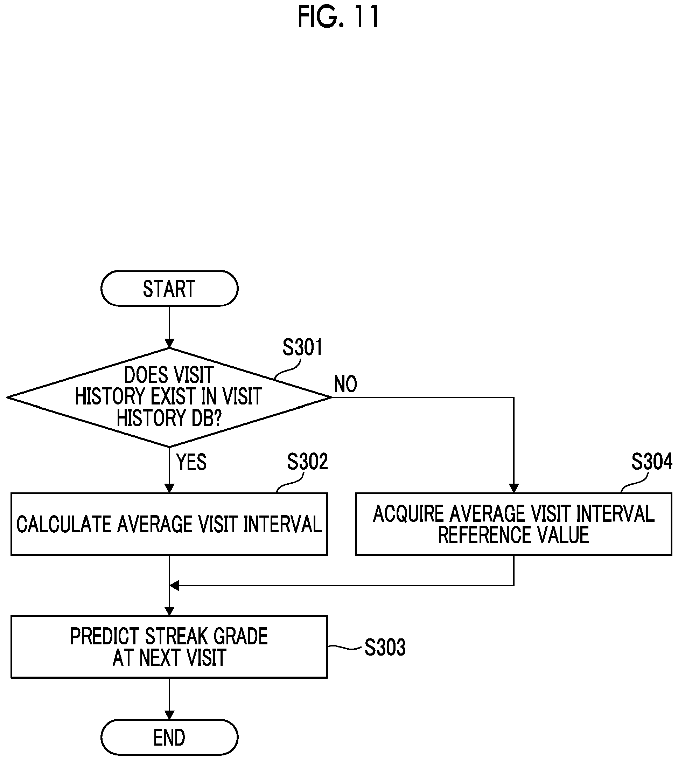

The reference value DB 123 stores a reference value used for calculation of a grade increase amount per day (see step S203 in Fig. 10), an average visit interval reference value (see step S304 in Fig. 11), and a threshold value of the streak grade as an allowable grade in a performance specification (see step S106 in Fig. 9).

The visit history DB 124 stores a visit history which is time information indicating a time when a repair service provider visits to perform an image diagnosis and the like in the past. The visit history is used to calculate an average visit interval (see step S302 in Fig. 11).

Next, the process of the diagnosis result acquisition unit 13 (see Fig. 6) will be described in more detail.

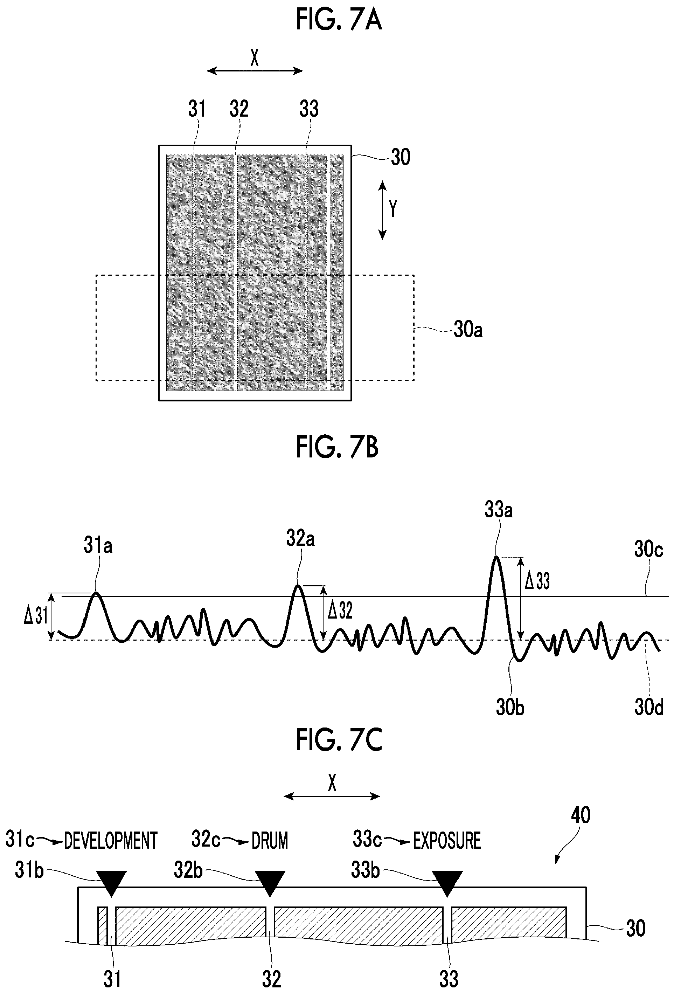

Figs. 7A to 7C are diagrams describing the process by the diagnosis result acquisition unit 13, Fig. 7A illustrates the scan image 30, Fig. 7B illustrates an average brightness profile, and Fig. 7C illustrates a diagnosis result, respectively. A process of the profile calculation unit 13a will be described with reference to Fig. 7A, a process of the image abnormality determination unit 13b will be described with reference to Fig. 7B, and a diagnosis result after a process of the cause specifying unit 13c will be described with reference to Fig. 7C.

For a part 30a of the scan image 30 illustrated in Fig. 7A, the profile calculation unit 13a (see Fig. 6) calculates a brightness profile. Such a brightness profile indicates a brightness variation in an arrow X direction.

Specifically, the brightness profile is an average brightness profile 30b (see Fig. 7B) in which a brightness in an arrow Y direction in the part 30a is averaged. As the calculation of the average, for example, a simple average, a square average, and a weighted average are considered.

In the scan image 30 illustrated in Fig. 7A, streaks 31, 32, and 33 extending in the arrow Y direction appear. The streaks 31 to 33 are examples of an image abnormality.

The image abnormality determination unit 13b (see Fig. 6) sets the average brightness 30d and a predetermined threshold value 30c for the average brightness profile 30b illustrated in Fig. 7B.

The average brightness profile 30b illustrated in Fig. 7B has vertices 31a, 32a, and 33a. The vertex 31a corresponds to the streak 31, the vertex 32a corresponds to the streak 32, and the vertex 33a corresponds to the streak 33.

All of the vertices 31a to 33a exceed the threshold value 30c. Thus, the image abnormality determination unit 13b determines that the vertices 31a to 33a are image abnormalities. The image abnormality is determined by focusing on contrast.

The cause specifying unit 13c specifies a cause of each of the streaks 31 to 33 by an image analysis on the scan image 30 illustrated in Fig. 7A. Such specification is that the streak 31 is caused by development by the developing unit 144 (see Fig. 4), the streak 32 is caused by a surface deterioration of the photoconductor drum 141 (see Fig. 4), and the streak 33 is caused by exposure by the exposure unit 143 (see Fig. 4).

Thus, as illustrated in Fig. 7C, a triangular mark 31b indicating a position of the streak 31 and a text 31c of "development" indicating the cause are attached to a result display screen 40 by the screen generation unit 14 corresponding to the streak 31 of the scan image 30. A triangular mark 32b indicating a position of the streak 32 and a text 32c of "drum" indicating the cause are attached corresponding to the streak 32. A triangular mark 33b indicating a position of the streak 33 and a text 33c of "exposure" indicating the cause are attached corresponding to the streak 33. The result display screen 40 described here is one of the generation screen 50 (see Fig. 6).

Here, as illustrated in Fig. 7B, a difference between the vertex 31a and the average brightness 30d is a difference Δ31. Differences between the average brightness 30d and the vertexes 32a and 33a are differences Δ32 and Δ33, respectively.

Among the differences Δ31 to Δ33, the difference Δ33 of the vertex 33a is the largest, and the difference Δ31 of the vertex 31a is the smallest (Δ31 < Δ32 < Δ33). As the difference is increased, the image abnormality clearly appears in the scan image 30, and the user can easily recognize the image abnormality. Therefore, the streak 31 corresponding to the vertex 31a is difficult to be checked, and the streak 33 corresponding to the vertex 33a is easy to be checked.

In such a case, for a repair service provider who receives a repair request in a case where an image abnormality occurs in a printout of a user, in a case where the streak 33 is a trouble, "exposure" which is a cause of the streak 33 is specified, and the corresponding measure for the streak 33 is given priority. On the other hand, the finer streaks 31 and 32 than the streak 33 may be likely to be overlooked even though the streaks 31 and 32 are detected by the image diagnosis and the measure may be postponed. In a case where measures are not immediately taken for the streaks 31 and 32 and the streaks 31 and 32 are image quality abnormalities that may develop into a trouble in the future, the image abnormality may occur in the user's printout and the image abnormality may cause a downtime.

Here, a case where the streak 32 is a finer streak than the streak 31 will be considered. That is, the streak 32 is the finest streak among the streaks 31 to 33. The finer streak 32 occurring due to a surface deterioration of the photoconductor drum 141 (see Fig. 4) further deteriorates in degree due to a temporal change of the image forming unit 100A (see Fig. 4). On the other hand, the streak 31 occurring due to development by the developing unit 144 (see Fig. 4) does not deteriorate in degree due to the temporal change.

In the present exemplary embodiment, in a case where the streak 32 of the streaks 31 and 32 is an image abnormality that may develop into a trouble in the future, the finest streak 32 is displayed on the result display screen 40 to notify the presence of the streak 32.

In the present exemplary embodiment, it is determined whether or not each of the streaks 31 to 33 is an image abnormality that may develop into a trouble in the future in accordance with the cause of the occurrence of the streaks 31 to 33. In other words, it is determined whether or not the abnormality is a worsening abnormality depending on whether or not the streaks 31 to 33 grow with the passage of time.

In the result display screen 40, the text 31c of "development" indicating the cause is displayed in association with the streak 31. In addition, on the result display screen 40, the text 32c of "drum" indicating the cause is displayed in association with the streak 32, and the text 33c of "exposure" indicating the cause is displayed in association with the streak 33.

Next, result display screens 41 and 42 displayed on the display device 310 of the user terminal 300 will be described.

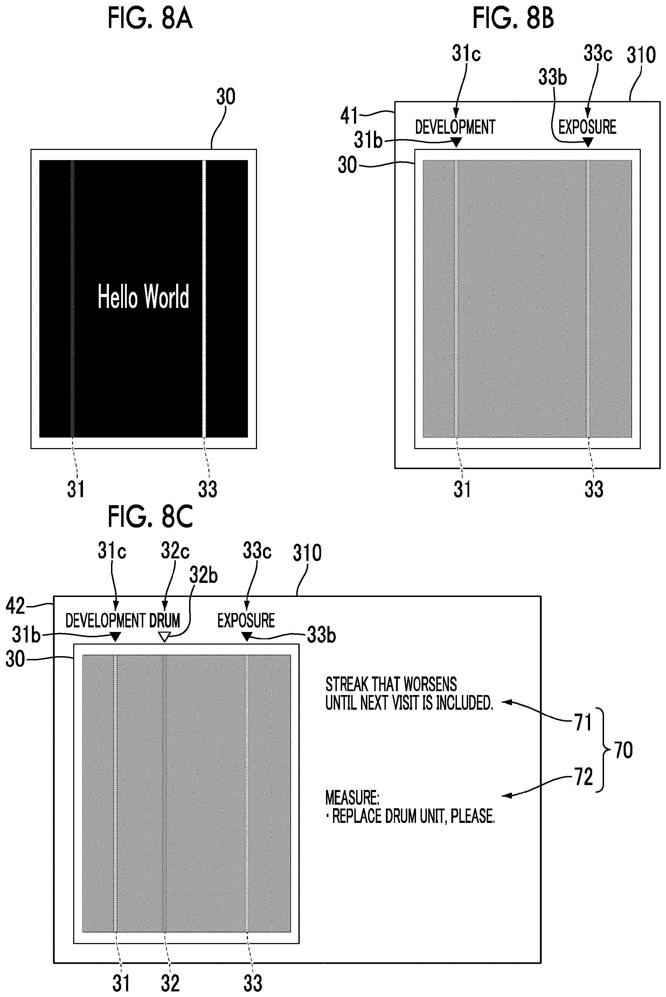

Figs. 8A to 8C are diagrams describing the result display screens 41 and 42 displayed on the display device 310 of the user terminal 300, Fig. 8A illustrates the scan image 30 as a diagnosis target, Fig. 8B illustrates the result display screen 41 as an example of a diagnosis result of the scan image 30, and Fig. 8C illustrates the result display screen 42 as another example of the diagnosis result of the scan image 30.

In the example of the scan image 30 illustrated in Fig. 8A, the streak 33 that cause a trouble and the streak 31 that is a fine streak appear.

The result display screen 41 illustrated in Fig. 8B includes the scan image 30 and a diagnosis result that is the triangular marks 31b and 33b corresponding to the streaks 31 and 33 in the scan image 30 and the texts 31c and 33c indicating the causes. The text 31c of "development" indicating the cause are attached to the streak 31, and the texts 33c of "exposure" indicating the cause are attached to the streak 33. The result display screen 41 includes an image illustrating the diagnosis result.

In other words, a display form of the triangular mark 3 1b corresponding to the streak 31 and the text 31c of "development" and a display form of the triangular mark 33b corresponding to the streak 33 and the text 33c of "exposure" are not changed.

It is assumed that a repair service provider who checks the diagnosis result on the result display screen 41 takes countermeasures for the exposure of the cause of the streak 33, which is a trouble this time, and does not take countermeasures at this time for the development, which is the cause of the streak 31.

The result display screen 42 illustrated in Fig. 8C includes the scan image 30 and a diagnosis result that is the triangular marks 31b to 33b corresponding to the streaks 31 to 33 and the texts 31c to 33c indicating the causes in the scan image 30. The result display screen 42 includes an image illustrating the diagnosis result.

The text 31c of "development" indicating the cause is attached to the streak 31, the text 32c of "drum" indicating the cause is attached to the streak 32, and the text 33c of "exposure" indicating the cause is attached to the streak 33.

More specifically, in the result display screen 42, the triangular mark 32b of the streak 32 and the text 32c of "drum" that are not included in the result display screen 41 illustrated in Fig. 8B are attached. The streak 32 occurs by a surface deterioration of the photoconductor drum 141 as a cause (see Fig. 4). Therefore, in a case where measures are not taken for the streak 32 at this time, a downtime may occur since the streak 32 is likely to develop into a trouble in the future although the streak 32 is a fine streak.

The display form of the triangular mark 32b and the text 32c of "drum" corresponding to the streak 32 is different from the display form of the triangular mark 31b and the text 31c of "development" corresponding to the streak 31 and the display form of the triangular mark 33b and the text 33c of "exposure" corresponding to the streak 33. In the example of the display mode illustrated in Fig. 8C, the triangular mark 32b of the streak 32 is a white mark, and the text 32c of "drum" is a bold text. In this manner, the triangular mark 32b and the text 32c of the streak 32 are displayed in a more emphasized form than the triangular mark 31b and the text 31c of the streak 31 and the triangular mark 33b and the text 33c of the streak 33.

Further, a caution alerting unit 70 for a user or a repair service provider is included in the result display screen 42 illustrated in Fig. 8C. The caution alerting unit 70 performs a caution alert for the streak 32. The result display screen 42 has a portion 71 of "streak that worsens until next visit is included." and a portion 72 of "measure: replace drum unit, please.". The caution alerting unit 70 alerts a measure such that a downtime does not occur.

The user or the repair service provider who sees the caution alerting unit 70 can easily perform, as a measure for the current trouble, a measure of replacing the drum unit including the photoconductor drum 141 (see Fig. 4), in addition to a measure for the exposure of the cause of the streak 33, which is the current trouble.

The caution alerting unit 70 is a portion that alerts a caution for the streak 32, and is an example of a display that alerts a caution for an event that may occur in the future. The portion 71 of the caution alerting unit 70 is an example of information indicating an estimated state of a worsening abnormality at a predetermined time, and the portion 72 is an example of information indicating a countermeasure for the worsening abnormality. The information indicating the countermeasure for the streaks 32 is used to alert a caution of contents corresponding to a deterioration in degree at a timing other than a time of the image diagnosis, and the caution alert is displayed or not displayed depending on the degree of deterioration of the streak after the image diagnosis.

In addition, with regard to the caution alerting unit 70, as illustrated in Fig. 8C, the portions 71 and 72 of the caution alerting unit 70 are displayed to be larger than the texts 31c to 33c of the streaks 31 to 33. In addition, it is also considered to display only one of the portions 71 and 72 of the caution alerting unit 70, and it is also considered to display only one of the portions 71 and 72 larger than the other. In addition, at least one of the portions 71 or 72 may be provided with a sign or symbol such as "!" that is easy to be seen by eyes, or may be displayed in a color that is not used in other portions, such as red.

In this manner, in the result display screen 42 illustrated in Fig. 8C, the display mode in which the triangular mark 32b and the text 32c of the streak 32 are emphasized is adopted, and the mode in which the caution alerting unit 70 is displayed is adopted. The diagnosis result is output in a mode in which the degree of emphasis to a user is increased. As a result, since the user does not forget to take measures for the worsening abnormality and executes the measures, occurrence of a trouble caused by a surface deterioration of the photoconductor drum 141 until the next visit is reduced.

Here, the streaks 31 to 33 are examples of an image abnormality, and the streak 32 among the streaks 31 to 33 is an example of a worsening abnormality that deteriorates in degree due to a temporal change of the image forming section. In addition, the temporal change of the image forming section includes a change accompanied by an output of a recording medium, and may also include a change not accompanied by the output of the recording medium. In addition, the temporal change may cause an improvement, as well as a deterioration.

In addition, the display of the streak 32 on the result display screen 40 (see Fig. 7C) and the result display screen 42 (see Fig. 8C) is an example of information related to the worsening abnormality. In addition, the display of the streaks 31 and 33 on the result display screens 40, 41, and 42 is an example of information related to other abnormalities than the worsening abnormality.

Further, the display of the streak 32 on the result display screen 42 and the caution alerting unit 70 for the streak 32 are examples of a mode in which the degree of emphasis to the user is increased, as compared with a mode related to the other abnormalities.

The mode in which the degree of emphasis is increased to the user means a mode in which the user is notified to be more likely to be noticed than other items, and also includes a notification by voice in addition to the notification by the screen display. In addition, the form in which the degree of emphasis is increased to the user also includes, for example, a form in which a visibility is increased, as compared with other portions in a color of the display, a size of the display, a position of the display, or the like.

Next, a process of determining display contents of the result display screen 40 will be described.

Fig. 9 is a flowchart describing a process of determining a display content of the result display screen 40.

In the processing according to the present invention illustrated in Fig. 9, the profile calculation unit 13a and the image abnormality determination unit 13b (see Fig. 6) detect a streak in the scan image 30 (for example, see Fig. 8A) (step S101), and the cause specifying unit 13c (see Fig. 6) specifies a cause of each detected streak (step S102).

Based on the specified cause, it is determined whether or not a growing streak exists (step S103).

In a case where the growing streak exists (Yes in step S103), a process of calculating the increase of streak grade to be described below is performed (step S104).

Next, a process of predicting the streak grade of the next visit is performed (step S105). Then, it is determined whether or not a streak grade at the next visit time by the process of predicting the streak grade of the next visit is equal to or higher than a threshold value (step S106). In a case where the streak grade at the next visit is equal to or higher than the threshold value (Yes in step S106), the streak grade is highlighted and displayed (step S107). That is, the result display screen 42 (see Fig. 8C) is displayed on the display device 310. The threshold value is acquired from the reference value DB 123 (see Fig. 6).

In a case where the streak grade at the next visit is less than the threshold value (No in step S106), the display is not changed (step S108). That is, the result display screen 41 (see Fig. 8B) is displayed on the display device 310, and the process is ended.

In a case where a growing streak does not exist (No in step S103), the process is ended.

Fig. 10 is a flowchart describing the process of calculating the increase of streak grade (see step S104 in Fig. 9) described above.

First, the increase amount calculation unit 13d (see Fig. 6) checks whether or not a previously scanned image data of past exclusive chart exists in the past chart DB 121 (see Fig. 6) of the secondary storage unit 12 (step S201). As described above, the exclusive chart described here is a chart for specifying a cause of an image abnormality, and is a chart obtained by scanning the chart image 61 (see Fig. 1) of the chart paper CP.

In a case where the previously scanned image data of past exclusive chart exists (Yes in step S201), the increase amount calculation unit 13d (see Fig. 6) reads the previously scanned image data of past exclusive chart from the past chart DB 121 (see Fig. 6). The increase amount calculation unit 13d (see Fig. 6) evaluates a grade of a streak at the identical position in the read previously scanned image data of past exclusive chart (step S202) and calculates a grade increase amount per day (step S203).

In a case where the previously scanned image data of past exclusive chart does not exist (No in step S201), the increase amount calculation unit 13d (see Fig. 6) acquires information indicating the number of operating days and the number of cycles from the operating logs DB 122 (see Fig. 6) (step S204). The increase amount calculation unit 13d (see Fig. 6) acquires an increase amount of a grade per cycle, by using such information and the reference value DB 123 (see Fig. 6) (step S205), proceeds to step S203, and calculates an increase amount of a grade per day.

In this manner, the increase amount calculation unit 13d (see Fig. 6) can acquire information on the grade increase amount per day not only in a case where the exclusive chart exists in the past chart DB 121 (see Fig. 6) but also in a case where the exclusive chart does not exist.

Fig. 11 is a flowchart describing a process of predicting the streak grade of the next visit (see step S105 in Fig. 9) described above.

First, the grade prediction unit 13e (see Fig. 6) checks whether or not a visit history exists in the visit history DB 124 (see Fig. 6) of the secondary storage unit 12 (step S301).

In a case where the visit history exists (Yes in step S301), the grade prediction unit 13e (see Fig. 6) reads the visit history from the visit history DB 124 (see Fig. 6). Then, the grade prediction unit 13e (see Fig. 6) calculates an average visit interval (step S302), and specifies a day of next visit. A streak grade at the next visit is predicted from the specified next visit day and the streak grade increase amount per day calculated by the process of calculating the increase of streak grade (see Fig. 10) described above (step S303).

In a case where there is no visit history (No in step S301), the grade prediction unit 13e (see Fig. 6) acquires an average visit interval reference value from the reference value DB 123 (see Fig. 6) (step S304), proceeds to step S303, and predicts a streak grade at the next visit.

In this manner, a cause is specified for each of the streaks 31 to 33, and for the streak 32 with which the specified cause is "drum" (see Yes in step S103 in Fig. 9), it is predicted whether or not a brightness of the next scheduled diagnosis date is equal to or higher than a threshold value. In a case where the brightness is equal to or higher than the threshold value (see "Yes" in step S106 in Fig. 9), the presence of the streaks 32 is notified with a highlighted display (see step S107 in Fig. 9). On the other hand, in a case where the brightness is lower than the threshold value (see "No" in step S106 in Fig. 9), the presence of the streaks 32 is not notified (see step S108 in Fig. 9).

The next scheduled diagnosis date referred to herein is an example of a predetermined time, and is not limited to the scheduled diagnosis date, and may be, for example, a scheduled diagnosis month or the like.

In the present exemplary embodiment, the determination (see step S106 in Fig. 9) using the threshold value of the streak grade is performed, and the present disclosure is not limited thereto. For example, it is considered that the determination is made by focusing on a difference obtained by specifying the next scheduled diagnosis date and predicting the difference in streak grade that is increased from the current diagnosis date to the next scheduled diagnosis date (difference Δ32 in Fig. 7B).

The threshold value or the difference in such determination is an example of a predetermined condition.

### Supplementary Note

According to appended claim 1, occurrence of a downtime can be reduced, as compared with a case where a notification that the image abnormality detected by the image diagnosis deteriorates is not given.

According to appended claim 2, the user can easily recognize the information on the worsening abnormality, as compared with a case where the configuration is not adopted in which the information on the other abnormality other than the worsening abnormality is output and the information on the worsening abnormality is output in the form in which a degree of emphasis to the user is increased as compared with the information on the other abnormality.

According to appended claim 3, the user can easily visually recognize the information on the worsening abnormality in a case where the configuration is not adopted in which the form in which the degree of emphasis to the user is increased is a display form for increasing the visibility.

According to appended claim 4, the information on the worsening abnormality can prompt the user to take measures for the event that may in the future, as compared with a case where the configuration including the display for giving the caution alert for the event that may occur in the future is not adopted.

According to appended claim 5, the user can easily take measures for the event that may occur in the future, as compared with a case where the configuration in which the display for giving the caution alert is provided with the information indicating the countermeasure for the worsening abnormality is not adopted.

According to appended claim 6, the display for giving the caution alert can present a timing for taking measures for the event that may occur in the future to the user, as compared with a case where the configuration including the information indicating the estimated state of the worsening abnormality at the predetermined time is not adopted.

According to appended claim 7, the user can be prevented from taking unnecessary measures, as compared with a case where the configuration is not adopted in which the display for giving the caution alert is included in the information on the worsening abnormality in a case where the next scheduled diagnosis date is specified and the specified next scheduled diagnosis date satisfies the predetermined condition for the worsening abnormality.

According to appended claim 8, accuracy of determining whether or not the image abnormality is the worsening abnormality can be improved, as compared with a case where the configuration is not adopted in which whether or not the image abnormality is the worsening abnormality is determined in accordance with the occurrence cause of the image abnormality.

According to appended claim 9, the occurrence of the downtime can be reduced, as compared with a case where a notification that the image abnormality detected by the image diagnosis deteriorates is not given.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

### Brief Description of the Reference Symbols

1: diagnosis system
11a: CPU
13: diagnosis result acquisition unit
14: image generation unit
31, 32, 33: streak
30: scan image
31c: text
40, 41, 42, 43: result display screen
61: chart image
70: caution alerting unit
71, 72: portion
100A: image forming unit
130: image scanning device
200: server apparatus
300: user terminal
310: display device
CP: chart paper
P: paper

## Claims

1. An information processing system (200) comprising:
one or a plurality of processors (11a) configured to:
acquire a scan image, which is an image obtained by a scanning section (130) scanning a diagnosis image of a recording medium output by an image forming section (100A);
detect a streak in the scan image and specify a cause of each detected streak;
determine whether a growing streak exists;
in a case where the growing streak exists, calculate an increase of a streak grade of the growing streak at a next visit of a repair service provider and predict a streak grade of the growing streak of a next visit;
determine whether the predicted streak grade of the growing streak of the next visit is equal to or higher than a threshold value, corresponding to a worsening abnormality that deteriorates in degree due to a temporal change of the image forming section, and if so, output with a diagnosis on the acquired scan image, information to a user to highlight the worsening abnormality.

2. The information processing system (200) according to claim 1, wherein the one or plurality of processors (11a) is configured to:
output information on another abnormality other than the worsening abnormality, and
the information on the worsening abnormality is output in a mode in which a degree of emphasis to a user is increased as compared with the information on the other abnormality.

3. The information processing system (200) according to claim 2,
wherein the form in which the degree of emphasis to the user is increased is a display form for increasing a visibility.

4. The information processing system (200) according to any one of claims 1 to 3,
wherein the information on the worsening abnormality includes a display for giving a caution alert for an event that is likely to occur in future.

5. The information processing system (200) according to claim 4,
wherein the display for giving the caution alert includes information indicating a countermeasure for the worsening abnormality.

6. The information processing system (200) according to claim 4,
wherein the display for giving the caution alert includes information indicating an estimated state of the worsening abnormality at a predetermined time.

7. The information processing system (200) according to claim 4,
wherein the display for giving the caution alert is included in the information on the worsening abnormality in a case where a next scheduled diagnosis date is specified and the specified next scheduled diagnosis date satisfies a predetermined condition for the worsening abnormality.

8. The information processing system (200) according to any one of claims 1 to 7,
wherein whether or not the image abnormality is the worsening abnormality is determined in accordance with an occurrence cause of the image abnormality.

9. A computer program comprising instructions which when executed by an information processing apparatus cause said apparatus to:
to:
acquire a scan image, which is an image obtained by a scanning section (130) scanning a diagnosis image of a recording medium output by an image forming section (100A);
detect a streak in the scan image and specify a cause of each detected streak;
determine whether a growing streak exists;
in a case where the growing streak exists, calculate an increase of a streak grade of the growing streak and predict a streak grade of the growing streak at a next visit of a repair service provider, determine whether the predicted streak grade of the growing streak of the next visit is equal to or higher than a threshold value, corresponding to a worsening abnormality that deteriorates in degree due to a temporal change of the image forming section, and if so, output with a diagnosis on the acquired scan image, information to a user to highlight the worsening abnormality.

10. An information processing method comprising:
acquiring a scan image, which is an image obtained by a scanning section (130) scanning a diagnosis image of a recording medium output by an image forming section (100A);
detecting a streak in the scan image and specify a cause of each detected streak;
determining whether a growing streak exists;
in a case where the growing streak exists, calculating an increase of a streak grade of the growing streak and predicting a streak grade of the growing streak at a next visit of a repair service provider,
determining whether the predicted streak grade of the growing streak of the next visit is equal to or higher than a threshold value; and
in a case where the predicted streak grade of the growing streak of the next visit is equal to or higher than the threshold value, corresponding to a worsening abnormality that deteriorates in degree due to a temporal change of the image forming section, and if so, output with a diagnosis on the acquired scan image, information to a user to highlight the worsening abnormality.

## Patentansprüche

1. Informationsverarbeitungssystem (200), umfassend:
einen oder mehrere Prozessoren (11a), die so konfiguriert sind, dass sie:
ein Scanbild, das ein Bild ist, das von einem Abtastabschnitt (130), der ein Diagnosebild eines Aufzeichnungsmediums, das von einem Bilderzeugungsabschnitt (100A) ausgegeben wird, abtastet, erhalten wird, erfasst;
einen Streifen in dem Scanbild detektiert und eine Ursache jedes detektierten Streifens spezifiziert;
bestimmt, ob ein wachsender Streifen existiert;
in einem Fall, in dem der wachsende Streifen existiert, eine Zunahme eines Streifengrades des wachsenden Streifens bei einem nächsten Besuch eines Reparaturdienstleisters berechnet und einen Streifengrad des wachsenden Streifens eines nächsten Besuchs vorhersagt;
bestimmt, ob der vorhergesagte Streifengrad des wachsenden Streifens des nächsten Besuchs gleich oder höher als ein Schwellenwert ist, der einer sich verschlechternden Abnormalität, die sich aufgrund einer zeitlichen Änderung des Bilderzeugungsabschnitts verschlechtert, entspricht, und wenn ja, mit einer Diagnose über das erfasste Scanbild Informationen an einen Benutzer ausgibt, um die sich verschlechternde Abnormalität hervorzuheben.

2. Informationsverarbeitungssystem (200) nach Anspruch 1, wobei der eine oder die mehreren Prozessoren (11a) so konfiguriert sind, dass sie:
Informationen über eine andere Abnormalität als die sich verschlechternde Abnormalität ausgeben, und
die Informationen über die sich verschlechternde Abnormalität in einem Modus ausgegeben werden, in dem ein Grad an Hervorhebung für einen Benutzer im Vergleich zu den Informationen über die andere Abnormalität erhöht ist.

3. Informationsverarbeitungssystem (200) nach Anspruch 2,
wobei die Form, in der der Grad an Hervorhebung für den Benutzer erhöht wird, eine Anzeigeform zum Erhöhen einer Sichtbarkeit ist.

4. Informationsverarbeitungssystem (200) nach einem der Ansprüche 1 bis 3,
wobei die Informationen über die sich verschlechternde Abnormalität eine Anzeige zum Geben einer Warnung für ein Ereignis, das in Zukunft wahrscheinlich auftritt, enthalten.

5. Informationsverarbeitungssystem (200) nach Anspruch 4,
wobei die Anzeige zum Geben der Warnung Informationen enthält, die eine Gegenmaßnahme für die sich verschlechternde Abnormalität angeben.

6. Informationsverarbeitungssystem (200) nach Anspruch 4,
wobei die Anzeige zum Geben der Warnung Informationen enthält, die einen geschätzten Zustand der sich verschlechternden Abnormalität zu einem vorbestimmten Zeitpunkt angeben.

7. Informationsverarbeitungssystem (200) nach Anspruch 4,
wobei die Anzeige zum Geben der Warnung in den Informationen über die sich verschlechternde Abnormalität in einem Fall enthalten ist, in dem ein nächster geplanter Diagnosedatum spezifiziert ist und das spezifizierte nächste geplante Diagnosedatum eine vorbestimmte Bedingung für die sich verschlechternde Abnormalität erfüllt.

8. Informationsverarbeitungssystem (200) nach einem der Ansprüche 1 bis 7,
wobei bestimmt wird, ob die Bildabnormalität die sich verschlechternde Abnormalität ist oder nicht, in Übereinstimmung mit einer Auftretensursache der Bildabnormalität.

9. Computerprogramm, das Anweisungen umfasst, die, wenn sie von einer Informationsverarbeitungsvorrichtung ausgeführt werden, die Vorrichtung veranlassen, dass sie:
ein Scanbild, das ein Bild ist, das von einem Abtastabschnitt (130), der ein Diagnosebild eines Aufzeichnungsmediums, das von einem Bilderzeugungsabschnitt (100A) ausgegeben wird, abtastet, erhalten wird, erfasst;
einen Streifen in dem Scanbild detektiert und eine Ursache jedes detektierten Streifens spezifiziert;
bestimmt, ob ein wachsender Streifen existiert;
in einem Fall, in dem der wachsende Streifen existiert, eine Zunahme eines Streifengrades des wachsenden Streifens berechnet und einen Streifengrad des wachsenden Streifens bei einem nächsten Besuch eines Reparaturdienstleisters vorhersagt,
bestimmt, ob der vorhergesagte Streifengrad des wachsenden Streifens des nächsten Besuchs gleich oder höher als ein Schwellenwert ist, der einer sich verschlechternden Abnormalität, die sich aufgrund einer zeitlichen Änderung des Bilderzeugungsabschnitts verschlechtert, entspricht, und wenn ja, mit einer Diagnose über das erfasste Scanbild Informationen an einen Benutzer ausgibt, um die sich verschlechternde Abnormalität hervorzuheben.

10. Informationsverarbeitungsverfahren, umfassend:
Erfassen eines Scanbildes, das ein Bild ist, das von einem Abtastabschnitt (130), der ein Diagnosebild eines Aufzeichnungsmediums, das von einem Bilderzeugungsabschnitt (100A) ausgegeben wird, abtastet, erhalten wird;
Detektieren eines Streifens in dem Scanbild und Spezifizieren einer Ursache jedes detektierten Streifens;
Bestimmen, ob ein wachsender Streifen existiert;
in einem Fall, in dem der wachsende Streifen existiert, Berechnen einer Zunahme eines Streifengrades des wachsenden Streifens und Vorhersagen eines Streifengrades des wachsenden Streifens bei einem nächsten Besuch eines Reparaturdienstleisters,
Bestimmen, ob der vorhergesagte Streifengrad des wachsenden Streifens des nächsten Besuchs gleich oder höher als ein Schwellenwert ist; und
Ausgeben, in einem Fall, in dem der vorhergesagte Streifengrad des wachsenden Streifens des nächsten Besuchs gleich oder höher als der Schwellenwert ist, der einer sich verschlechternden Abnormalität, die sich aufgrund einer zeitlichen Änderung des Bilderzeugungsabschnitts verschlechtert, entspricht, und wenn ja, mit einer Diagnose über das erfasste Scanbild Informationen an einen Benutzer, um die sich verschlechternde Abnormalität hervorzuheben.

## Revendications

1. Système de traitement d'informations (200) comprenant :
un ou une pluralité de processeurs (11a) configurés pour :
acquérir une image de balayage, qui est une image obtenue par une section de balayage (130) balayant une image de diagnostic d'un support d'enregistrement sortie par une section de formation d'images (100A) ;
détecter une strie dans l'image de balayage et spécifier une cause de chaque strie détectée ;
déterminer s'il existe une strie croissante ;
dans un cas où la strie croissante existe, calculer une augmentation d'un degré de strie de la strie croissante lors d'une prochaine visite d'un prestataire de services de réparation et prédire un degré de strie de la strie croissante lors d'une prochaine visite ;
déterminer si le degré de strie prédit de la strie croissante de la prochaine visite est égale ou supérieure à une valeur seuil, correspondant à une anomalie aggravée qui se détériore en degré en raison d'un changement temporel de la section de formation d'images, et si tel est le cas, sortir avec un diagnostic sur l'image de balayage acquise, des informations à un utilisateur pour mettre en évidence l'anomalie aggravée.

2. Système de traitement d'informations (200) selon la revendication 1, dans lequel l'un ou la pluralité de processeurs (11a) sont configurés pour :
sortir des informations sur une autre anomalie autre que l'anomalie aggravée, et
les informations sur l'anomalie aggravée sont sorties dans un mode dans lequel un degré de mise en évidence pour un utilisateur est augmenté par rapport aux informations sur l'autre anomalie.

3. Système de traitement d'informations (200) selon la revendication 2,
dans lequel la forme dans laquelle le degré de mise en évidence pour l'utilisateur est augmenté est une forme d'affichage pour augmenter une visibilité.

4. Système de traitement d'informations (200) selon l'une quelconque des revendications 1 à 3,
dans lequel les informations sur l'anomalie aggravée incluent un affichage pour fournir une alerte d'avertissement concernant un événement qui est susceptible de se produire à l'avenir.

5. Système de traitement d'informations (200) selon la revendication 4,
dans lequel l'affichage pour fournir l'alerte d'avertissement inclut des informations indiquant une contre-mesure pour l'anomalie aggravée.

6. Système de traitement d'informations (200) selon la revendication 4,
dans lequel l'affichage pour fournir l'alerte d'avertissement inclut des informations indiquant un état estimé de l'anomalie aggravée à un moment prédéterminé.

7. Système de traitement d'informations (200) selon la revendication 4,
dans lequel l'affichage pour fournir l'alerte d'avertissement est inclus dans les informations sur l'anomalie aggravée dans un cas où une prochaine date de diagnostic prévue est spécifiée et où la prochaine date de diagnostic prévue spécifiée satisfait à une condition prédéterminée pour l'anomalie aggravée.

8. Système de traitement d'informations (200) selon l'une quelconque des revendications 1 à 7,
dans lequel le fait que l'anomalie d'image soit oui ou non l'anomalie aggravée est déterminé conformément à une cause d'apparition de l'anomalie d'image.

9. Programme informatique comprenant des instructions qui, lorsqu'elles sont exécutées par un appareil de traitement d'informations, amènent ledit appareil à :
acquérir une image de balayage, qui est une image obtenue par une section de balayage (130) balayant une image de diagnostic d'un support d'enregistrement sortie par une section de formation d'images (100A) ;
détecter une strie dans l'image de balayage et spécifier une cause de chaque strie détectée ;
déterminer s'il existe une strie croissante ;
dans un cas où la strie croissante existe, calculer une augmentation d'un degré de strie de la strie croissante et prédire un degré de strie de la strie croissante lors d'une prochaine visite d'un prestataire de services de réparation,
déterminer si le degré de strie prédit de la strie croissante de la prochaine visite est égale ou supérieure à une valeur seuil, correspondant à une anomalie aggravée qui se détériore en degré en raison d'un changement temporel de la section de formation d'images, et si tel est le cas, sortir avec un diagnostic sur l'image de balayage acquise, des informations à un utilisateur pour mettre en évidence l'anomalie aggravée.

10. Procédé de traitement d'informations comprenant :
acquérir une image de balayage, qui est une image obtenue par une section de balayage (130) balayant une image de diagnostic d'un support d'enregistrement sortie par une section de formation d'images (100A) ;
détecter une strie dans l'image de balayage et spécifier une cause de chaque strie détectée ;
déterminer s'il existe une strie croissante ;
dans un cas où la strie croissante existe, calculer une augmentation d'un degré de strie de la strie croissante et prédire un degré de strie de la strie croissante lors d'une prochaine visite d'un prestataire de services de réparation,
déterminer si le degré de strie prédit de la strie croissante lors de la prochaine visite est égale ou supérieure à une valeur seuil ; et
dans un cas où le degré de strie prédit de la strie croissante lors de la prochaine visite est égale ou supérieure à la valeur seuil, correspondant à une anomalie aggravée qui se détériore en degré en raison d'un changement temporel de la section de formation d'images, et si tel est le cas, sortir avec un diagnostic sur l'image de balayage acquise, des informations à un utilisateur pour mettre en évidence l'anomalie aggravée.
